# EUROPÄISCHE PATENTSCHRIFT

(11) **EP 3 383 234 B1**
(45) Veröffentlichungstag und Bekanntmachung des Hinweises auf die Patenterteilung: **24.08.2022**
(21) Anmeldenummer: 16801524.6
(22) Anmeldetag: 28.11.2016
(51) Int. Cl.: A47J 31/36, A47J 31/44

(54) **BRÜHMODUL, KAPSELERKENNUNGSMODUL UND GETRÄNKEZUBEREITUNGSMASCHINE**
BREWING MODULE, CAPSULE SENSOR MODULE AND MACHINE FOR MAKING BEVERAGES
MODULE D'ÉBOUILLANTAGE, MODULE DE DÉTECTION DE CAPSULE ET MACHINE DE PRÉPARATION DE BOISSONS

(30) Priorität: 01.12.2015 EP 15197376
(43) Veröffentlichungstag der Anmeldung: 10.10.2018
(73) Patentinhaber: Tchibo (Schweiz) AG, 8304 Wallisellen (CH)
(72) Erfinder: ZWICKER, Dominic, 9650 Nesslau (CH); FOSCAN, Claudio, 8645 Rapperswil-Jona (CH)
(74) Vertreter: Frei Patent Attorneys
(86) Internationale Anmeldenummer: PCT/EP2016/078987
(87) Internationale Veröffentlichungsnummer: WO 2017/093178

(56) Entgegenhaltungen:
- EP-A1- 3 028 608
- WO-A1-2015/004552
- GB-A- 2 411 105

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels oder automatisch motorisiert verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet.

Ein Problemfeld in diesem Zusammenhang betrifft das Erfassen von Kapseleigenschaften, beispielsweise das Auslesen von auf der Kapsel angebrachten Informationen zum Auslösen eines Brühprozesses abhängig vom diesen Informationen. Eine Möglichkeit dafür besteht darin, die Kapsel mit einer geeigneten Markierung oder Farbkombination zu versehen und diese optisch zu erfassen. Dies geschieht beispielsweise mit einer Kamera. Allerdings ergeben sich praktische Probleme bei einem solchen in unmittelbarer Nähe der Brühkammer durchgeführten Prozess. Aufgrund der von der Brühkammer abgegebenen Wärme, von Wasserdampf und von Verschmutzungen ist es einerseits wünschenswert, eine Kamera möglichst entfernt von der Brühkammer und von dieser abgeschirmt anzubringen. Andererseits können entsprechende Abschirmungen - beispielsweise in der Form von Fenstern - den Ausleseprozess selbst erschweren, insbesondere wenn sie beschlagen oder verschmutzen. Die üblichen Massnahmen gegen ein solches Beschlagen oder Verschmutzen sind Beschichtungen, die jedoch in einer Brühkammer-Umgebung nur beschränkt wirksam sind.

GB 2 411 105 und WO 2015/004552 zeigen je eine Kaffeemaschine zum Zubereiten von Kaffee aus einer Portionenkapsel, bei welcher ein auf der Kapsel angebrachtes grafisches Element durch ein Fenster hindurch optisch erfasst wird. Ein solches Fenster kann aber leicht beschlagen oder verschmutzen und sollte gut reinigbar sein.

Es ist Aufgabe der Erfindung, eine Getränkezubereitungsmaschine zur Verfügung zu stellen, welche Nachteile des Standes der Technik überwindet und welche durch eine möglichst einfache Konstruktion die Erfassung von Eigenschaften einer verwendeten Portionskapsel vor dem Brühprozess ermöglicht.

Gemäss der Erfindung wird ein Kapselerkennungsmodul für ein Brühmodul zum Zubereiten eines Brühgetränks aus einer Portionenkapsel zur Verfügung gestellt, welches aufweist:
- eine Kapseleinlegeöffnung, durch welche eine Kapsel in eine Kapselerkennungsposition einlegbar ist,
- einen optischen Sensor, insbesondere eine Kamera, zum Erfassen von optischen Eigenschaften der Kapsel, welche sich an einer Kapselerkennungsposition befindet, und
- ein Kapselerkennungsfenster aus einem transparenten Material zwischen der Kapselerkennungsposition und dem optischen Sensor, und
- einen Moduldeckel welcher eine Zugangsöffnung verschliesst und eingerichtet ist, reversibel, insbesondere werkzeugfrei geöffnet und/oder entfernt zu werden, wobei bei geöffnetem oder entferntem Moduldeckel die Seite des Kapselerkennungsfensters zur Kapselerkennungsposition hin durch die Zugangsöffnung hindurch zugänglich ist.
- wobei die Zugangsöffnung von der Kapseleinlegöffnung separat ist.

Der Moduldeckel kann reversibel geöffnet oder entfernt werden, indem er nicht fest/stoffschlüssig mit den übrigen Teilen (beispielsweise einem Modulgehäuse) verbunden ist. Vielmehr ist ein Öffnen/Entfernen zerstörungsfrei möglich, und der Moduldeckel kann auch wieder an seine definierte ursprüngliche, die Zugangsöffnung verschliessende Position gebracht werden. Der Moduldeckel kann insbesondere als von einem Modulgehäuse separates Teil vorhanden sein, welches in Ausführungsformen bspw. über einen als Schwenkachse fungierenden Stift oder dergleichen schwenkbar mit diesem verbunden ist.

Es kann in Ausführungsformen ein Einschnappen oder Einklicken des Deckels in der verschliessenden Position vorgesehen sein. Das Öffnen/Entfernen und Schliessen des Deckels kann durch den Durchschnittsbenutzer werkzeugfrei, d.h. mit den Fingern eines Benutzers möglich sein, wobei auch der (vorgeschriebene oder vorteilhafte) Einsatz von Werkzeugen nicht ausgeschlossen ist.

Unter "Fenster" wird hier eine Durchgangsöffnung verstanden, die durch das transparente Material, insbesondere in Scheibenform, mindestens teilweise verschlossen wird, so, dass die Achse das transparente Material (die Scheibe) durchquert. In dem meisten Fällen ist das transparente Material als Scheibe mit planparallelen Oberflächen ausgebildet, wodurch das Fenster keinen Einfluss auf die optischen Abbildungseigenschaften hat. Es ist aber nicht ausgeschlossen, das Fenster auch bspw. mit einer Linsenfunktion zu versehen, so dass es beispielsweise kollimierend wirkt oder auf andere Art die Abbildungseigenschaften beeinflusst, derart, dass es bei der Berechnung der Kamera-Abbildungseigenschaften mit berücksichtigt werden muss. In Fällen, in denen das transparente Fenstermaterial nicht eine planparallele Scheibe bildet, beziehen sich die Aussagen zur Lage des Fensters auf die Mittelebene des transparenten Fenstermaterials.

Der Moduldeckel ist im Allgemeinen von einem eventuellen, die Kapseleinlegeöffnung der Getränkezubereitungsmaschine verschliessendem Deckel (Schieber, schwenkbarer Hebel oder dergleichen) verschieden. Das Kapselerkennungsmodul weist nebst der genannten, durch den Moduldeckel verschlossenen Zugangsöffnung auch einen separaten Zugang, namentlich die Kapseleinlegeöffnung, zur Kapselerkennungsposition hin auf, so dass der Moduldeckel im Normalbetrieb verschlossen bleiben kann.

Indem die Zugangsöffnung von der Kapseleinlegeöffnung separat ist, ist das Modul so ausgestaltet, dass das Kapselerkennungsfenster auch zugänglich ist, wenn sich eine Kapsel an der Kapselerkennungsposition befindet. Das kann vorteilhaft sein, bspw. dann, wenn ein Benutzer die Kapsel bereits eingelegt hat, eine Kapselerkennung aber nicht erfolgreich ist, weil das Kapselerkennungsfenster beschlagen oder verschmutzt ist. Dann braucht der Benutzer bloss den Moduldeckel zu öffnen um das Kapselerkennungsfenster abzuwischen und muss dafür nicht die Kapsel entfernen.

Der Moduldeckel ist insbesondere zwischen der Kapseleinlegeöffnung und einer axialen Position des Kapselerkennungsfensters angeordnet, so dass durch die Zugangsöffnung ein Bereich zwischen der Kapselerkennungsposition und dem Kapselerkennungsfenster zugänglich gemacht wird. Der Umstand, dass das Fenster aus einem "transparenten" Material ist, bedeutet nicht, dass es vollständig durchlässig für den ganzen sichtbaren Teil des elektromagnetischen Spektrums sein muss. Vielmehr wird lediglich eine Transparenz für einen Teil des elektromagnetischen Spektrums verlangt, in welchem der optische Sensor empfindlich ist für welchen die Kapsel ein optisch auslesbares Merkmal aufweist. In Frage kommen dabei insbesondere Licht im sichtbaren Wellenlängenbereich oder Infrarotlicht.

In Ausführungsformen ist das Kapselerkennungsfenster in einem nicht-rechten Winkel zu einer Achse zwischen der Kapselerkennungsposition und dem optischen Sensor angeordnet.

Als die Achse zwischen der Kapselerkennungsposition und dem optischen Sensor wird hier eine Achse im optischen Sinn verstanden, d.h. im Falle von Lichtumlenkungsmitteln zwischen Kapselerkennungsposition und Sensor entspricht die Achse nicht notwendigerweise einer direkten Verbindung sondern einem Strahlengang eines auf kürzestem Weg von der Mitte einer von der Kamera erfassten Fläche der Kapsel an der Kapselerkennungsposition zur Mitte des Sensors gelangenden Lichtstrahls. Wenn der optische Sensor eine Kamera mit einer Kameraoptik ist, kann die Achse mit einer optischen Achse (Symmetrieachse) der Kameraoptik zusammenfallen.

Durch die einfache Massnahme "nicht-rechter Winkel" kann verhindert werden, dass Reflexionen von Licht, welches aus Richtung des optischen Sensors eingestrahlt wird, auf den optischen Sensor einwirken, oder solche Reflexionen können mindestens verringert werden.

Das kann beispielsweise dann besonders relevant sein, wenn gemäss Ausführungsformen mindestens eine Lichtquelle in Bezug auf die Kapselerkennungsposition hinter dem Kapselerkennungsfenster angeordnet ist. Eine solche Anordnung einer Lichtquelle kann von praktischem Vorteil sein, weil die Lichtquelle dann ebenfalls durch das Kapselerkennungsfenster geschützt ist und ausserdem gut mit der Kamera intergrierbar ist, beispielsweise indem sie auf derselben Platine angeordnet ist wie der Kamerasensor. In Ausführungsformen kann eine Mehrzahl von LED-Lichtquellen vorhanden sein, beispielsweise um den optischen Sensor herum angeordnet.

Durch die Vermeidung von Reflexionen kann der optische Sensor, weil keine störenden Einflüsse von solchen Reflexen vorhanden sind, sehr empfindlich eingestellt sein.

Der Winkel der Senkrechten auf das Kapselerkennungsfensters zur Achse am Ort ihres Durchtritts durch das Fenster beträgt beispielsweise mindestens 10°, insbesondere mindestens 15° oder mindestens 20°, und bspw. maximal 55° oder 45° oder 40°.

Insbesondere kann das Kapselerkennungsfenster zur Seite des Moduldeckels hin geneigt sein, d.h. die Normale auf das Kapselerkennungsfenster zur Seite der Kapselerkennungsposition hin zeigt von der Achse weg und hat eine Komponente in Richtung zum Moduldeckel hin. Dadurch kann der Benutzer bei geöffnetem oder entferntem Moduldeckel auf diese Seite des Kapselerkennungsfensters schauen, sieht eine eventuelle Verschmutzung oder einen Beschlag sofort und kann bei Bedarf auch das Kapselerkennungsfenster reinigen.

Das Fenster wird aber im Allgemeinen nicht parallel zum Moduldeckel sein, sondern in einem nicht-rechten Winkel zu diesem. Insbesondere kann der Moduldeckel im geschlossenen Zustand ungefähr parallel zur Achse verlaufen (d.h. bspw. eine durch den Moduldeckel definierte Ebene oder Translationsachse verläuft ungefähr parallel zur Achse).

In Ausführungsformen verläuft die genannte Achse zwischen der Kapselerkennungsposition und dem optischen Sensor ungefähr horizontal, und der Deckel schliesst einen optischen Bereich, in welchem das Licht von der Kapselerkennungsposition zum optischen Sensor gelangt (und durch welchen hindurch in Ausführungsformen mit Lichtquelle bspw. Licht auf die Kapsel eingestrahlt wird) nach oben oder zu einer Seite hin ab.

Der Moduldeckel kann insbesondere schwenkbar sein, d.h. er ist an einer Schwenkachse am Gehäuse (des Kapselerkennungsmoduls bzw. des Brühmoduls/der Getränkezubereitungsmaschine) befestigt und ist durch eine Schwenkbewegung zu öffnen. Er kann beispielsweise gegebenenfalls unter einem Bedienhebel oder anderen Bedienelement (Schieber oder dergleichen) der Getränkezubereitungsmaschine angeordnet sein, unter welchem sich auch eine Kapseleinlegeöffnung befindet, so dass ein Öffnen des Moduldeckels ein Öffnen des Bedienelements voraussetzt.

Die Funktion des Moduldeckels in dessen geschlossenen Zustand kann nebst einem mechanischen Schutz des Kapselerkennungsfensters auch eine optische Abschirmung des optischen Bereichs vor Umgebungslicht sein. Zu diesem Zweck kann der Moduldeckel aus einem intransparenten Material gefertigt sein.

Es kann insbesondere vorgesehen sein, dass bei geschlossenem Moduldeckel ein Inneres des Kapselerkennungsmoduls und mithin des Brühmoduls, zu welchem das Kapselerkennungsmodul gehört, im in die Getränkezubereitungsmaschine eingebauten Zustand nur zur notwendigen Kapseleinlegeöffnung hin offen ist. Dabei ist die Kapseleinlegeöffnung im Allgemeinen in an sich bekannter Art verschliessbar, beispielsweise durch einen Bedienhebel, einen Schieber oder dergleichen.

In Ausführungsformen weist das Kapselerkennungsmodul weiterhin einen Lüfter zum Erzeugen eines Luftstroms auf der Seite des Kapselerkennungsfensters zur Kapselerkennungsposition hin auf. Als "Lüfter" wird hier ein aktiver Lüfter verstanden, d.h. ein Lüfter, bei welchem Luft durch aktiven Energieeintrag bewegt wird, insbesondere ein elektrisch angetriebener Lüfter. Der Lüfter kann insbesondere als Ventilator ausgebildet sein, welcher Luft zwischen dem Bereich vor dem Kapselerkennungsfenster und einer Umgebung der Getränkezubereitungsmaschine transportiert. Durch einen solchen Lüfter wird einem Beschlagen des Kapselerkennungsfensters effizient vorgebeugt.

Mit dem Kapselerkennungsmodul kann - das ist an sich bekannt - insbesondere erstens bestimmt werden, ob die eingelegte Kapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Kapsel für die Zubereitung von z.B. Ristretto, Espresso oder Lungo vorgesehen ist.

Geeignete optisch auslesbare Merkmale sind beispielsweise ein Strichcode, ein 2D-MatrixCode (bspw. QR-Code oder Aztec-Code), ein Piktogramm (Icon) und/oder auch eine bestimmte Farbgebung. Auch ein Code gemäss einer der europäischen Patentanmeldungen 14 197 487.3, 14 197 488.1 und/oder 14 197 489.9 kommt in Frage.

Das Kapselerkennungsmodul gemäss weist ausserdem beispielsweise mindestens eine Lichtquelle zur Beleuchtung der Kapsel an der Kapselerkennungsposition auf. Eine solche Lichtquelle wird vorzugsweise hinter dem Kapselerkennungsfenster, d.h. der Seite des Kapselerkennungsfensters zum optischen Sensor hin angeordnet sein, um wie auch der optische Sensor durch das Kapselerkennungsfenster vor Dämpfen und Verschmutzungen geschützt zu sein.

Eine solche Lichtquelle kann bspw. eine LED oder eine Anzahl von LEDs umfassen.

Zwischen der Lichtquelle und der Kapselerkennungsposition, bspw. ebenfalls hinter dem Fenster, kann ein Lichtdiffusor vorhanden sein, um auffällige Reflexe auf der Kapsel zu verhindern, insbesondere in Fällen, in denen die Kapseloberfläche leicht spiegelnd wirkt.

Eine Lichtquelle und ein Diffusor können insbesondere in Bezug auf den optischen Sensor und eine eventuelle optische Achse peripher angeordnet sein; der Diffusor kann bspw. eine Kameraoptik umgeben.

In Ausführungsformen mit schrägem Kapselerkennungsfenster sind Reflexionen der Lichtquelle am Fenster vom Ort des optischen Sensors her nicht sichtbar sind. Der optische Sensor kann daher, weil keine störenden Einflüsse von solchen Reflexen vorhanden sind, sehr empfindlich eingestellt sein.

Das Kapselerkennungsmodul kann Teil als eines Brühmoduls verwendbar oder einem solchen zugeordnet sein.

Die Erfindung betrifft auch eine Getränkezubereitungsmaschine mit einem Kapselerkennungsmodul der beschriebenen Art.

Es kann insbesondere vorgesehen sein, dass die Getränkezubereitungsmaschine ein horizontales Brühmodul der einleitend beschriebenen Art aufweist. Das Kapselerkennungsmodul kann oberhalb derjenigen Position (Brühposition) angeordnet sein, in welchem sich im geschlossenen Zustand des Brühmoduls die Brühkammer befindet. Die Kapselerkennungsposition ist dann vertikal oberhalb der Brühposition. Die genannte Achse zwischen der Kapselerkennungsposition und dem optischen Sensor kann ungefähr horizontal verlaufen und die Zugangsöffnung eine Öffnung von oben her oder von der Seite her sein.

Die Kapseleinlegeöffnung der Maschine kann ein Einlegen der Kapsel direkt in die Kapselerkennungsposition ermöglichen, d.h. die Kapseleinlegeöffnung kann vom Kapselerkennungsmodul gebildet werden. In alternativen Ausführungsformen können eine äussere Kapseleinlegeöffnung in einem Maschinengehäuse und eine innere Kapseleinlegeöffnung am Kapselerkennungserkennungsmodul ausgebildet sein.

Wie bereits erwähnt kann die Getränkezubereitungsmaschine ein Bedienelement (Hebel, Schieber oder dergleichen) aufweisen, mit welchem die Kapseleinlegeöffnung verschlossen werden kann. Es kann insbesondere vorgesehen sein, dass ein solches Bedienelement der Maschine im geschlossenen Zustand auch den Moduldeckel abdeckt.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht eines Brühmoduls mit Kapselerkennungsmodul;
- Fig. 2: eine Schnittdarstellung des in eine Kaffeemaschine eingebauten Brühmoduls mit Kapselerkennungsmodul von Fig. 2;
- Fig. 3 und 4: je eine Ansicht des Kapselerkennungsmoduls gemäss Fig. 1 und 2 mit geschlossenem und offenem Moduldeckel;
- Fig. 5und 6: je eine Schnittdarstellung dieses Kapselerkennungsmoduls;
- Fig. 7: eine Explosionsdarstellung einer Kameraeinheit des Kapselerkennungsmoduls;
- Fig. 8: die Kameraeinheit im zusammengebautem Zustand;
- Fig. 9: eine zweite Streulichtblende des Kapselerkennungsmoduls;
- Fig. 10: einen Reflektor des Kapselerkennungsmoduls;
- Fig. 11: einen Diffusor des Kapselerkennungsmoduls; und
- Fig. 12: ein Schema einer Getränkezubereitungsmaschine.

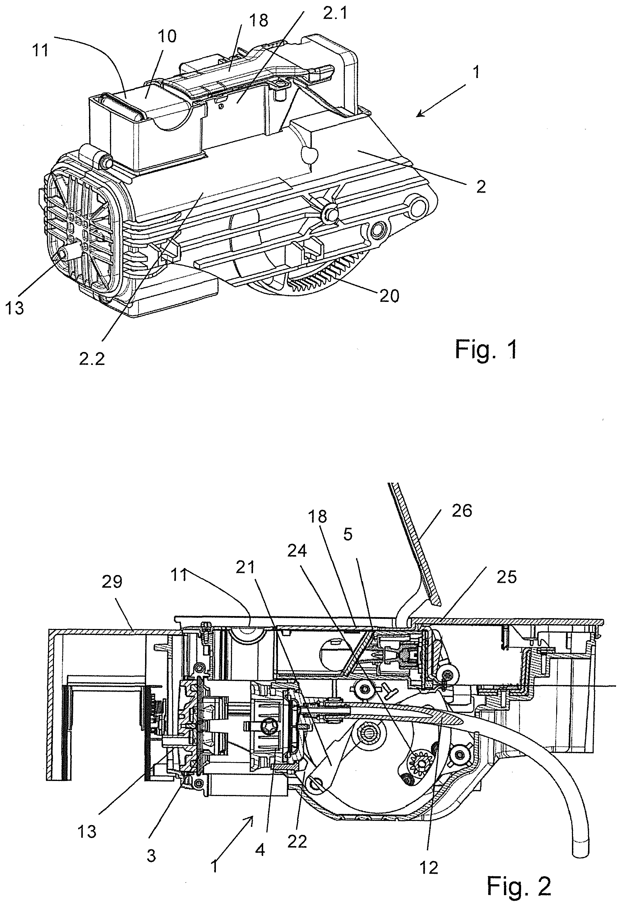

Das Brühmodul 1 gemäss **Figur** 1 weist ein äusseres Brühmodulgehäuse 2 auf. Dieses setzt sich im dargestellten Ausführungsbeispiel aus einem oberen Gehäuseteil 2.1 (Kapselerkennungsgehäuse) und einem unteren Gehäuseteil 2.2 (Brühkammereinheitsgehäuse) zusammen. Oberseitig ist eine Kapseleinlegeöffnung 11 ausgebildet, durch welche eine Portionenkapsel 10 in das Brühmodul einlegbar ist.

**Figur** 2 zeigt in einem Längsschnitt einen Teil einer Kaffeemaschine mit dem Brühmodul. Das Brühmodul 1 ist in ein äusseres Maschinengehäuse 25 mit einem schwenkbaren Bedienhebel 26 eingebaut, welcher im geschlossenen Zustand die Kapseleinlegeeöffnung 11 abdeckt. Das Gehäuse bildet vorderseitig auch eine Auslaufhaube 29.

Im Brühmodulgehäuse 2 sind zwei relativ zueinander bewegbare Brühmodulteile geführt, nämlich eine Ausleitvorrichtung 3 und ein Injektor 4.

Der Injektor 4 weist Perforationselemente zum Anstechen einer Kapsel auf, die über die Einlegeöffnung 11 in das Brühmodul einbringbar ist und mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung 12 zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen. Diese können beispielsweise ausgebildet sein wie in WO 2015/039258 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung der Brühmodulteile Ausleitvorrichtung und Injektor wird im hier beschriebenen Ausführungsbeispiel dadurch erreicht, dass die Ausleitvorrichtung 3 gehäusefest montiert ist, während der Injektor 4 entlang der horizontalen Achse bewegbar ist. Der Antrieb des Injektors erfolgt über einen via eine Ritzelwelle 24 und eine verzahnte Antriebsscheibe 20 motorisiert angetriebenen Kniehebel mit einem ersten Kniehebelarm 21 verbunden ist und einem zweiten Kniehebelarm 22..

Oberhalb der Brühkammereinheit mit Ausleitvorrichtung 3 und Injektor 4 weist das Brühmodul ein Kapselerkennungsmodul 5 mit einer Kamera auf. Eine durch die Kapseleinlegeöffnung 11 eingelegte Kapsel gelangt zuerst zu einer Kapselerkennungsposition, im Kapselerkennungsmodul, wo - unter Umständen abhängig Betriebszustand - optische Eigenschaften der Kapsel ausgelesen werden. Anschliessend wird die Kapsel nach unten in die Brühposition weitergegeben. Ein dafür in Frage kommender Mechanismus wird in PCT/EP2015/076812 beschrieben, auf die hier ausdrücklich Bezug genommen wird. Andere Mechanismen, auch mit einem manuell vorzunehmenden Weitertransport, oder die Möglichkeit, dass die Kapselerkennungsposition der Brühposition entspricht, sind nicht ausgeschlossen.

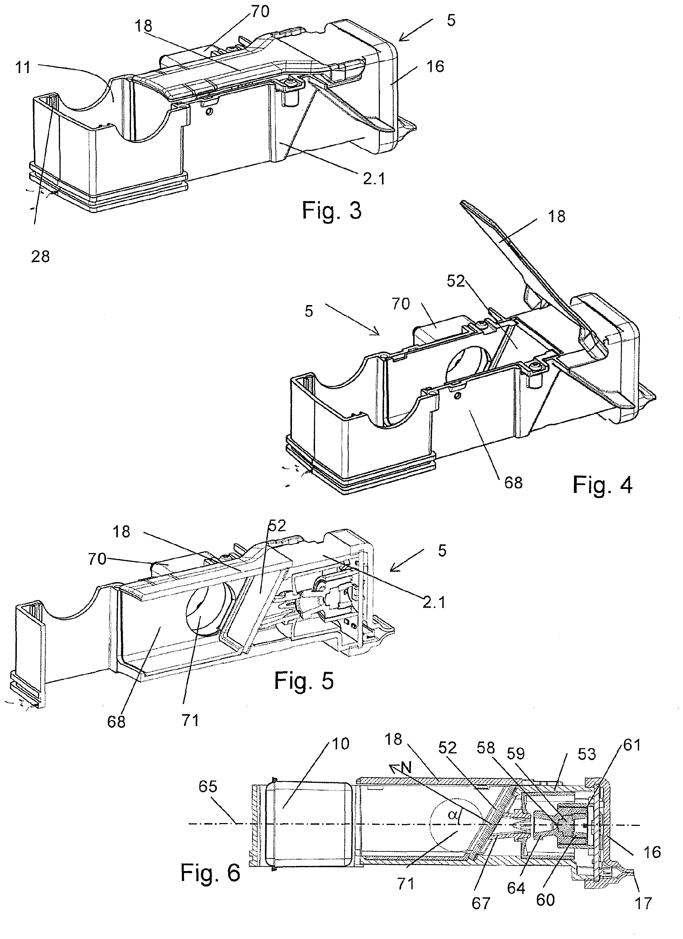

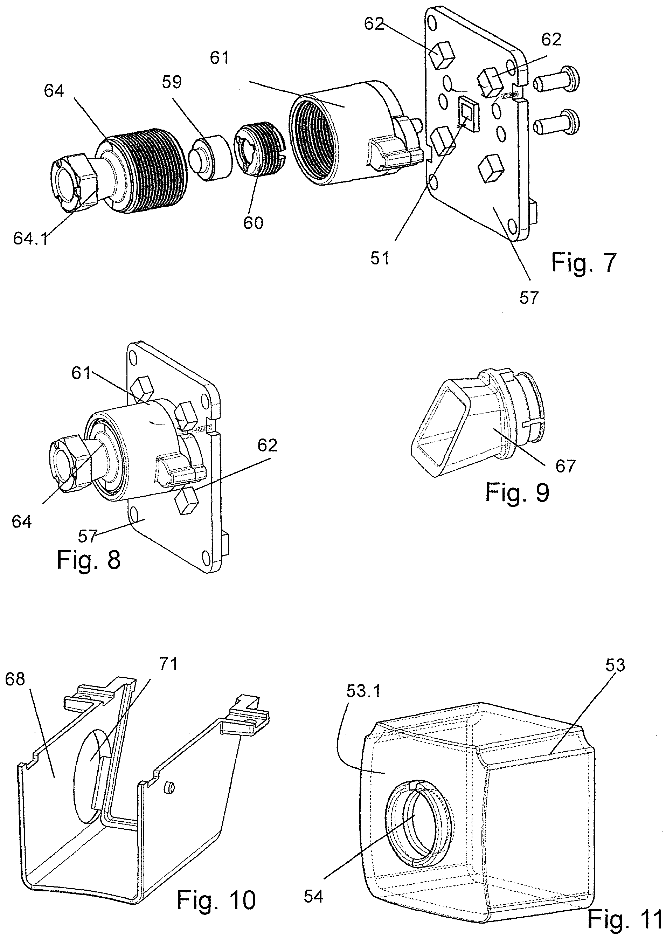

**Figur 3** zeigt das Kapselerkennungsmodul inklusive den oberen Gehäuseteil 2.1, und **Figur 4** zeigt eine entsprechende Ansicht mit offenem Moduldeckel 18. **Figur 5** zeigt eine Ansicht des angeschnitten dargestellten Kapselerkennungsmoduls mit oberem Gehäuseteil, und **Figur 6** zeigt eine entsprechende Schnittdarstellung mit Kapsel 10. Figur 7zeigt eine Explosionsdarstellung der Kameraeinheit, **Figur 8** zeigt die Kameraeinheit im zusammengebauten Zustand, und **Figuren 9-11** zeigen weitere Elemente des Kapselerkennungsmoduls.

Die Kamera ist für Wartungszwecke durch eine hinterseitige Silikonabdeckung 16 zugänglich, welche einen Teil des oberen Gehäuseteils 2.1 bildet. Diese bildet eine Dichtlippe 17 aus, durch welche ein Flachbandkabel dichtend durchgeführt werden kann; über ein solches Flachbandkabel findet ein Datenaustausch mit einer zentralen Maschinensteuerung und -auswerteelektronik statt; auch die Stromversorgung der Kamera und der Lichtquellen erfolgt darüber.

Die Kamera weist einen Kamerasensor 51, bspw. mit einem CCD- oder CMOS-Sensorarray, auf, welcher auf einer Platine 57 angeordnet ist. Auf der Platine 57 sind unter auch mehrere LEDs 62 als Lichtquellen angeordnet, welche beim Kapselerkennungsvorgang Licht erzeugen, das via einen Diffusor 53 (Fig. 11, vgl. auch Fig. 6) mit einer strukturierten und daher diffundierend wirkenden Stirnfläche 53.1 und ein Kapselerkennungsfenster 52 auf die Kapsel geworfen wird. Ein Teil des Kapselerkennungsmodul-Gehäuses ist optional als Reflektor 68 mit einer auf der Innenseite spezifisch strukturierten und reflektierenden Oberfläche ausgestaltet, welcher dazu beiträgt, Licht von den LEDs 62 gleichmässig auf der Kapseloberfläche zu verteilen. Am Reflektor 68 ist auch eine Öffnung 71 für den Lüfter ausgebildet.

An der Kapsel ist ein geeignetes optisch auslesbares Merkmal vorhanden, beispielsweise ein Strichcode, ein 2D-MatrixCode (bspw. QR-Code oder Aztec-Code), ein Piktogramm (Icon), ein Code gemäss einer oder mehrerer der europäischen Patentanmeldungen 14 197 487.3, 14 197 488.1, 14 197 489.9 und/oder auch eine bestimmte Farbgebung.

Die durch die Lichtquellen beleuchtete Seite der Kapsel wird von der Kamera erfasst und in der Kamera oder durch ein separates, beispielsweise ebenfalls in der Kaffeemaschine vorhandenes Modul (nicht abgebildet) ausgewertet.

Das von der beleuchteten Kapsel zurückgeworfene Licht gelangt zu diesem Zweck durch das Kapselerkennungsfenster 52, und eine Diffusoröffnung 54 im Diffusor 53 zur Kamera, welche eine Blende 58, mindestens eine Linse 59 sowie den Kamerasensor 51 aufweist.

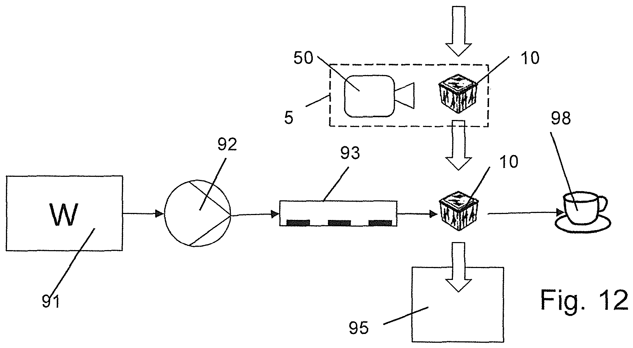

Die Linse 59 ist hier durch einen inneren Linsenhalter 64 gehalten und durch eine Linsenfixierung 60 fixiert (Fig. 12). Der innere Linsenhalter 64 ist in einen äusseren Linsenhalter 61 geschraubt, wobei der äussere Linsenhalter 61 auf der Platine 57 montiert ist. Der innere Linsenhalter 64 ist zu Fokussierungszwecken im inneren Linsenhalter drehbar angeordnet, wobei eine Drehung eine relative Verschiebung bewirkt, aufgrund der Schraubverbindung zwischen äusserem und innerem Linsenhalter. Der innere Linsenhalter 64 bildet auch die Blende 58 sowie eine erste Streulichtblende 64.1, welche verhindert, dass beispielsweise am Diffusor rückgestreutes Licht in die Kameraoptik gelangt. Eine zweite Streulichtblende 67 mit einem analogen Zweck ist am Diffusor 33 aufgesteckt.

Die mechanischen Details der Kameraoptik und die Ausgestaltung des Diffusors können jedoch auch ohne Weiteres anders gewählt werden.

Nach einem Brühvorgang wird Wasserdampf auch in den Bereich oberhalb der Brühposition und in eine Umgebung der Kapselerkennungsposition gelangen. Das Kapselerkennungsmodul weist nebst der Kameraeinheit daher auch das erwähnte Kapselerkennungsfenster 52 auf, welches die Kamera und gegebenenfalls andere optische oder elektronische Bauteile vom Bereich trennt, in welchen der Wasserdampf gelangen kann.

In Bezug auf die Kapselerkennungsposition vor dem Kapselerkennungsfenster 52 befindet sich ein Lüfter 70, der während des Kapselerkennungsvorgangs und/oder davor einen Luftstrom vor dem Kapselerkennungsfenster bewirkt, indem er Luft von ausserhalb der Kaffeemaschine ansaugt und durch die Öffnung 71 im Gehäuse - hier im Reflektor 68 - vor das Kapselerkennungsfenster 52 bläst.

Ein Merkmal des Kapselerkennungsfensters ist, dass das Kapselerkennungsfenster 52 ist in einem nicht-rechten Winkel zur Achse 65 (Fig. 6) zwischen Kapselerkennungsposition und Kamerasensor 51 angeordnet. Dadurch wird effizient verhindert, dass Reflexionen der Lichtquellen die Abbildung der Kapsel auf dem Kamerasensor überlagern und die Auswertung verfälschen können. Der Winkel α der Kapselerkennungsfensterebene zur Senkrechten auf die Achse 65 Kapselerkennungsposition-Kamerasensor (definiert als die jeweils durch die Mitte der Kamerasensorfläche bzw. der an der Kapselerkennungsposition befindlichen Kapsel gehend, siehe Fig. 6; die Achse 65 kann mit der optischen Achse der Kamera zusammenfallen) beträgt beispielsweise mindestens 10°, insbesondere mindestens 15°, und bspw. maximal 55° oder 45°, im dargestellten Beispiel ca. 30°.

Ein schwenkbarer Moduldeckel 18 ist oberseitig angeordnet. Gegebenenfalls bei geöffnetem Bedienhebel 26 kann der Moduldeckel 18 durch eine Schwenkbewegung nach oben geöffnet werden und erlaubt so den Zugang zum Kapselerkennungsfenster. Die Orientierung des Kapselerkennungsfensters ist dabei so gewählt, dass das Kapselerkennungsfenster zur Seite des Moduldeckels 18 hin geneigt ist, d.h. die Normale N auf das Kapselerkennungsfenster zeigt von der Achse 65 weg und hat eine Komponente in Richtung hin zum Moduldeckel. Dadurch kann ist das Kapselerkennungsfenster 52 brühkammerseitig gut zugänglich und kann bei Beschlag oder Verunreinigung rasch und effizient gereinigt werden.

Eine erfindungsgemässe Maschine zum Zubereiten eines Brühgetränks aus einer Portionenkapsel, nämlich hier eine Kaffeemaschine, mit einem Brühmodul ist in **Figur** 12 schematisch dargestellt. Es weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Das Kapselerkennungsmodul 5 mit der Kamera 50 befindet sich insbesondere oberhalb der Brühkammer. Eine eingelegte Kapsel kann nach dem Kapselerkennungsprozess wie vorstehend beschrieben durch die Wirkung der Schwerkraft nach unten weitertransportiert werden. Das ist jedoch keine Notwendigkeit.

Unterhalb des Brühmoduls ist ausserdem ein Kapselbehälter 95 angeordnet, in welchen die Kapseln 1 nach dem Brühprozess fallen bzw. transportiert werden. Das Bezugszeichen 98 bezeichnet eine Kaffeetasse.

### Bezugszeichenliste:

1 Brühmodul
2 Gehäuse
3 Ausleitvorrichtung
4 Injektor
5 Kapselerkennungsmodul
10 Kapsel
10' zweite Kapsel
11 Einlegeöffnung
12 Wasserzuführung
13 Getränkeauslauf
16 Silikonabdeckung
17 Dichtlippe
18 Moduldeckel
20 Antriebsscheibe
21 Erster Kniehebelarm
22 zweiter Kniehebelarm
24 Ritzelwelle
25 äusseres Maschinengehäuse
26 Bedienhebel
28 Seitliche Führung
29 Auslaufhaube
50 Kamera
51 Kamerasensor
52 Kapselerkennungsfenster
53 Diffusor
54 Diffusoröffnung
57 Platine
58 Blende
59 Linse
60 Linsenfixierung
61 äusserer Linsenhalter
62 LED
64 innerer Linsenhalter
64.1 erste Streulichtblende
65 Achse
67 zweite Streulichtblende
68 Reflektor
70 Lüfter
71 Öffnung
91 Wassertank
92 Pumpe
93 Wasserheizungsvorrichtung
95 Kapselbehälter
98 Kaffeetasse

## Patentansprüche

1. Kapselerkennungsmodul für ein Brühmodul zum Zubereiten eines Brühgetränks aus einer Portionenkapsel (10), aufweisend eine Kapseleinlegeöffnung (11), durch welche eine Kapsel in eine Kapselerkennungsposition einlegbar ist, und ferner aufweisend:
• einen optischen Sensor, insbesondere eine Kamera (50), zum Erfassen von optischen Eigenschaften der Kapsel (10), welche sich an der Kapselerkennungsposition befindet; und
• ein Kapselerkennungsfenster (52) aus einem transparenten Material zwischen der Kapselerkennungsposition und dem optischen Sensor; **gekennzeichnet durch**
• einen Moduldeckel (18) welcher eine Zugangsöffnung verschliesst und eingerichtet ist, reversibel geöffnet und/oder entfernt zu werden, wobei bei geöffnetem oder entferntem Moduldeckel (18) die Seite des Kapselerkennungsfensters (52) zur Kapselerkennungsposition hin durch die Zugangsöffnung hindurch zugänglich ist,
• **dadurch gekennzeichnet, dass** die Zugangsöffnung von der Kapseleinlegeöffnung separat ist.

2. Kapselerkennungsmodul nach Anspruch 1, wobei das Kapselerkennungsfenster (50) in einem nicht-rechten Winkel zu einer Achse zwischen der Kapselerkennungsposition und dem optischen Sensor angeordnet ist.

3. Kapselerkennungsmodul nach Anspruch 2, wobei ein Winkel (a) zwischen einer Senkrechten auf das Kapselerkennungsfenster und der Achse am Ort ihres Durchtritts durch das Fenster zwischen 10° und 45° beträgt.

4. Kapselerkennungsmodul nach Anspruch 2 oder 3, wobei das Kapselerkennungsfenster (52) zur Seite des Moduldeckels (18) hin geneigt ist.

5. Kapselerkennungsmodul nach einem der vorangehenden Ansprüche, aufweisend mindestens eine Lichtquelle (62) zur Beleuchtung der Kapsel an der Kapselerkennungsposition, wobei die Lichtquelle auf der Seite des Kapselerkennungsfensters (52) zum optischen Sensor hin angeordnet ist.

6. Kapselerkennungsmodul nach Anspruch 5, aufweisend einen Diffusor (53) für von der Lichtquelle (62) erzeugtes Licht.

7. Kapselerkennungsmodul nach einem der vorangehenden Ansprüche, aufweisend einen Lüfter (70) zum Erzeugen eines Luftstroms auf der Seite des Kapselerkennungsfensters (52) zur Kapselerkennungsposition hin.

8. Kapselerkennungsmodul nach einem der vorangehenden Ansprüche, wobei der Moduldeckel an einer Schwenkachse an einem Modulgehäuse befestigt ist und durch eine Schwenkbewegung genöffnet werden kann.

9. Getränkezubereitungsmaschine, insbesondere Kaffeemaschine, aufweisend eine Wasserzufuhr, eine Pumpe (92) und ein Wassererhitzungsmittel (93) sowie ein Kapselerkennungsmodul (5) nach einem der vorangehenden Ansprüche.

10. Getränkezubereitungsmaschine nach Anspruch 9, wobei die Zugangsöffnung bei offen zugänglicher Kapseleinlegeöffnung durch den Moduldeckel (18) verschliessbar ist.

11. Getränkezubereitungsmaschine nach einem der Ansprüche 9 oder 10, aufweisend ein Bedienelement (26) zum Verschliessen der Kapseleinlegeöffnung (11), wobei der Moduldeckel durch das Bedienelement abgedeckt wird, wenn dieses die Kapseleinlegeöffnung verschliesst.

## Claims

1. A capsule recognition module for a brewing module for preparing a brewed drink from a portion capsule (10), comprising a capsule insert opening (11), through which a capsule can be inserted into a capsule recognition position, and further comprising:
• an optical sensor, in particular a camera (50), for detecting optical characteristics of the capsule (10) which is located at a capsule recognition position,
• a capsule recognition window (52) of a transparent material between the capsule recognition position and the optical sensor, **characterised by**
• a module cover (18) which closes an access opening and is configured to be reversibly opened and/or removed, wherein given an opened or removed module cover (18), the side of the capsule recognition window (52) which is towards the capsule recognition position is accessible through the access opening.
• **characterized in that** the access opening is separate from the capsule insert opening.

2. A capsule recognition module according to claim 1, wherein the capsule recognition window (50) is arranged at a non-right angle to an axis between the capsule recognition position and the optical sensor.

3. A capsule recognition module according to claim 2, wherein an angle (α) between a perpendicular to the capsule recognition window and the axis at the location of its passage through the window is between 10° and 45°.

4. A capsule recognition module according to claim 2 or 3, wherein the capsule recognition window (52) is inclined towards the side of the module cover (18).

5. A capsule recognition module according to one of the preceding claims, comprising at least one light source (62) for illuminating the capsule at the capsule recognition position, wherein the light source is arranged on the side of the capsule recognition window (52) which is towards the optical sensor.

6. A capsule recognition module according to claim 5, comprising a diffuser (53) for light which is produced by the light source (62).

7. A capsule recognition module according to one of the preceding claims, comprising a fan (70) for producing an airflow at the side of the capsule recognition window (52) which is towards the capsule recognition position.

8. A capsule recognition module according to one of the preceding claims, wherein the module cover is fastened on a module housing at a pivot axis and can be opened by way of a pivoting movement.

9. A drinks preparation machine, in particular coffee machine, comprising a water feed, a pump (92) and a water heating means (93) as well as a capsule recognition module (5) according to one of the preceding claims.

10. A drinks preparation machine according to claim 9, wherein the access opening is closable by the module cover (18) given an openly accessible capsule insert opening.

11. A drinks preparation machine according to one of the claims 9 or 10, comprising an operating element (26) for closing the capsule insert opening (11), wherein the module cover is covered by the operating element when this closes the capsule insert opening.

## Revendications

1. Module de détection de capsule pour un module d'infusion destiné à préparer une boisson infusée à partir d'une capsule en portion (10), comprenant une ouverture d'insertion de capsule (11) à travers laquelle une capsule peut être insérée dans une position de détection de capsule, et comprenant en outre :
• un capteur optique, en particulier une caméra (50), pour détecter les propriétés optiques de la capsule (10) qui se trouve à la position de détection de capsule ; et
• une fenêtre de détection de capsule (52) faite d'un matériau transparent entre la position de détection de capsule et le capteur optique ; **caractérisé par**
• un couvercle de module (18) qui ferme une ouverture d'accès et est adapté pour être ouvert et/ou retiré de manière réversible, le côté de la fenêtre de détection de capsule (52) vers la position de détection de capsule étant accessible à travers l'ouverture d'accès lorsque le couvercle de module (18) est ouvert ou retiré,
• **caractérisé en ce que** l'ouverture d'accès est séparée de l'ouverture d'insertion de capsule.

2. Module de détection de capsule selon la revendication 1, dans lequel la fenêtre de détection de capsule (50) est disposée selon un angle non perpendiculaire à un axe entre la position de détection de capsule et le capteur optique.

3. Module de détection d'encapsulation selon la revendication 2, dans lequel un angle (a) entre une perpendiculaire à la fenêtre de détection d'encapsulation et l'axe à l'endroit de son passage à travers la fenêtre est compris entre 10° et 45°.

4. Module de détection de capsules selon la revendication 2 ou 3, dans lequel la fenêtre de détection de capsules (52) est inclinée vers le côté du couvercle (18) du module.

5. Module de détection de capsule selon l'une des revendications précédentes, comprenant au moins une source lumineuse (62) pour éclairer la capsule à la position de détection de capsule, la source lumineuse étant disposée du côté de la fenêtre de détection de capsule (52) vers le capteur optique.

6. Module de détection de capsule selon la revendication 5, comprenant un diffuseur (53) de la lumière générée par la source lumineuse (62).

7. Module de détection de capsules selon l'une quelconque des revendications précédentes, comprenant un ventilateur (70) pour générer un flux d'air sur le côté de la fenêtre de détection de capsules (52) vers la position de détection de capsules.

8. Module de détection de capsules selon l'une quelconque des revendications précédentes, dans lequel le couvercle du module est fixé à un boîtier du module au niveau d'un axe de pivotement et peut être ouvert par un mouvement de pivotement.

9. Machine de préparation de boissons, en particulier machine à café, présentant une alimentation en eau, une pompe (92) et un moyen de chauffage de l'eau (93) ainsi qu'un module de détection de capsule (5) selon l'une des revendications précédentes.

10. Machine de préparation de boissons selon la revendication 9, dans laquelle l'ouverture d'accès peut être fermée par le couvercle (18) du module lorsque l'ouverture d'insertion de la capsule est accessible en position ouverte.

11. Machine de préparation de boissons selon l'une des revendications 9 ou 10, comprenant un élément de commande (26) pour fermer l'ouverture d'insertion de capsule (11), le couvercle du module étant recouvert par l'élément de commande lorsque ce dernier ferme l'ouverture d'insertion de capsule.
